# EUROPÄISCHE PATENTSCHRIFT

(11) **EP 3 231 971 B1**
(45) Veröffentlichungstag und Bekanntmachung des Hinweises auf die Patenterteilung: **02.09.2020**
(21) Anmeldenummer: 17000598.7
(22) Anmeldetag: 07.04.2017
(51) Int. Cl.: E05B 83/42, E05B 85/10, E05B 53/00, E05B 51/02

(54) **NUTZFAHRZEUG, INSBESONDERE BAUFAHRZEUG, MIT EINEM FAHRERHAUS MIT WENIGSTENS EINER FAHRERHAUSTÜR**
COMMERCIAL VEHICLE, IN PARTICULAR CONSTRUCTION VEHICLE, WITH A DRIVER'S CAB WITH AT LEAST ONE CAB DOOR
VÉHICULE UTILITAIRE, EN PARTICULIER ENGIN DE CHANTIER COMPRENANT UNE CABINE CONDUCTEUR AYANT AU MOINS UNE PORTIÈRE DE CONDUCTEUR

(30) Priorität: 14.04.2016 DE 102016004586
(43) Veröffentlichungstag der Anmeldung: 18.10.2017
(73) Patentinhaber: MAN Truck & Bus SE, 80995 München (DE)
(72) Erfinder: Brüchner, Nathan, 80689 München (DE); Jochum, Christina, 85716 Unterschleißheim (DE)
(74) Vertreter: Liebl, Thomas

(56) Entgegenhaltungen:
- EP-A1- 3 006 655
- EP-A2- 1 270 853
- DE-A1-102010 005 261
- JP-U- H02 117 909
- KR-B1- 101 563 983

## Beschreibung

Die Erfindung betrifft ein Nutzfahrzeug, insbesondere ein Baufahrzeug, mit einem Fahrerhaus mit wenigstens einer Fahrerhaustür nach dem Oberbegriff des Anspruchs 1.

Es sind Nutzfahrzeuge, insbesondere Baufahrzeuge, allgemein bekannt, mit einem erhöhten Stehplatz für eine Person, insbesondere auf einem sogenannten Bauaufstieg oder einer Ladefläche seitlich hinter der wenigstens einen Fahrerhaustür, etwa in der Höhe eines Betätigungsgriffs eines Türschlosses der Fahrerhaustür. Ein solcher Betätigungsgriff dient zum Öffnen der Fahrerhaustür und liegt üblicherweise in einem oberen Griffbereich einer neben dem Fahrzeug auf dem Boden stehenden Person.

Eine Person, insbesondere ein Fahrer, kann von einem solchen erhöhten Stehplatz aus, bei stehendem Fahrzeug den Bereich im Umfeld des Fahrzeugs wesentlich besser einsehen und beobachten als eine Person, die neben dem Fahrzeug auf dem Boden steht. Insbesondere kann beispielsweise ein Beladevorgang gut kontrolliert und es können beispielsweise Beladehilfen bei gutem Sichtkontakt ferngesteuert bedient werden. Ein solcher erhöhter Stehplatz kann einfach auf einer Ladefläche hinter einem Fahrerhaus im Bereich einer Fahrerhaustür eingenommen werden. Bei allgemein bekannten Nutzfahrzeugen, insbesondere bei Baufahrzeugen, wird ein solcher erhöhter Stehplatz auch dadurch zur Verfügung gestellt, dass ein sogenannter Bauaufstieg, insbesondere über einem vorderen Radhaus, als Trittfläche angebracht ist, gegebenenfalls in Verbindung mit einer Halteeinrichtung für die Hände im Dachbereich des Fahrerhaus.

Um auf die Trittfläche eines Bauaufstiegs zu gelangen, muss eine Person bei offener Fahrerhaustür über das Fahrerhaus auf die Trittfläche hinaufsteigen. Auch der Aufstieg auf eine Ladefläche kann so erfolgen. Der Abstieg von der Trittfläche des Bauaufstiegs oder der Ladefläche erfolgt dann ebenfalls über das Fahrerhaus bei offener Fahrerhaustür. Falls die Fahrerhaustür, während sich die Person auf der Trittfläche des Bauaufstiegs/Ladefläche befindet, geschlossen worden ist, kann der relativ weit unten im Fußbereich der Person liegende Betätigungsgriff des Türschlosses nicht oder nur sehr mühsam betätigt werden, so dass die Person meist kräftezehrend und sicherheitskritisch ohne Einstiegsmöglichkeit ins Fahrerhaus von der Trittfläche nach unten zum Boden turnen muss. Deshalb wird üblicherweise die Fahrerhaustür von einer Person auf den Bauaufstieg zum Beispiel bei einer Überwachung von Beladevorgängen offengelassen. Damit sind während dieser Zeit der Innenraum des Fahrerhauses und die Türbedienmodule widrigen Umwelteinflüssen ungeschützt ausgesetzt. Insbesondere kühlt bei tiefen Außentemperatur das Innere des Fahrerhauses bei offener Fahrerhaustür nachteilig ab und muss bei einer Weiterfahrt erst wieder energieverzehrend aufgewärmt werden.

Aus der JP H 02 117909 U ist ein Nutzfahrzeug mit einem Fahrerhaus und wenigstens einer Fahrerhaustür bekannt, bei dem im Bereich eines erhöhten Standplatzes zwei voneinander beabstandete Betätigungsmittel zur Betätigung eines Türschlosses der Fahrerhaustür vorgesehen sind.

Die DE 10 2010 005 261 A1 beschreibt einen Zug, wobei im Bereich einer Zugtür in der Zugaußenwand ein oberer Türgriff und ein unterer Türgriff vorgesehen sind.

Aufgabe der Erfindung ist es daher, ein Nutzfahrzeug, insbesondere ein Baufahrzeug, mit einem Fahrerhaus und mit wenigstens einer Fahrerhaustür so auszurüsten, dass eine Person bequem einen Abstieg von einem Bauaufstieg/Ladefläche auch nach einer Tätigkeit bei geschlossener Fahrerhaustür mit geschlossenem Türschloss bequem durchführen kann.

Diese Aufgabe wird durch die Merkmale der unabhängigen Patentansprüche gelöst. Bevorzugte Weiterbildungen sind in den Unteransprüchen offenbart.

Gemäß Patentanspruch 1 wird ein Nutzfahrzeug, insbesondere ein Baufahrzeug, vorgeschlagen, mit einem Fahrerhaus, mit wenigstens einer Fahrerhaustür und mit einem erhöhten Stand- bzw. Stehplatz für eine Person, insbesondere auf einem Bauaufstieg oder einer in etwa Ladefläche seitlich hinter der wenigstens einen Fahrerhaustür, in etwa im Bereich und/oder in der Höhe eines Betätigungsgriffs eines zugeordneten Türschlosses zum Öffnen der Fahrerhaustür im Griffbereich einer neben dem Fahrzeug auf dem Boden stehenden Person. Erfindungsgemäß ist vorgesehen, dass das Türschloss zum Öffnen der Fahrerhaustür zudem mittels wenigstens eines zusätzlichen Betätigungsmittels betätigbar ist, das zusätzlich zum Betätigungsgriff im Bereich des erhöhten Standplatzes angeordnet ist. Dies erfolgt konkret so, dass das zusätzliche Betätigungsmittel beabstandet vom Betätigungsgriff im Bereich des erhöhten Standplatzes angeordnet ist. Zusätzlich kann ein zusätzliches Betätigungsmittel als Ergänzungselement am Betätigungsgriff selbst angeordnet oder anordenbar sein. Mit der erfindungsgemäßen Lösung kann das Türschloss zum Öffnen der Fahrerhaustür somit von einer Person am erhöhten Standplatz mittels wenigstens eines von dort von der Person gut erreichbaren Betätigungsmittels betätigt werden.

Damit wird verhindert, dass eine Person zum Verlassen des erhöhten Standplatzes bei vorher geschlossener Fahrerhaustür einen kräftezehrenden Abstieg mit nicht immer vorhandenem turnerischen Geschick durchführen muss oder versuchen muss, durch Verrenkungen gegebenenfalls den üblichen (unteren) Betätigungsgriff des Türschlosses für eine Handbetätigung zum Öffnen der Fahrerhaustür zu erreichen.

Da die Person auf dem erhöhten Standplatz erfindungsgemäß einfach und bequem das Türschloss der Fahrerhaustür zum Öffnen betätigen und einfach absteigen kann, ist es vorteilhaft möglich, während der Verweildauer auf dem erhöhten Standplatz die Fahrerhaustür zum Schutz des Fahrerhausinnenraums und der Türbedienmodule vor Umwelteinflüssen zu schließen, wobei insbesondere das Innere des Fahrerhauses durch die kürzeren Öffnungszeiten der Fahrerhaustür wärmer bleibt.

In einer erfindungsgemäßen, konkreten Ausführungsform wird vorgeschlagen, dass dazu als Betätigungsmittel zusätzlich zu einem dem Türschloss zugeordneten unteren Betätigungsgriff wenigstens ein weiterer, in Hochachsenrichtung gesehen oberer Betätigungsgriff angeordnet wird, und zwar insbesondere im oberen, seitlich hinteren Bereich der Fahrerhaustür und/oder im hinteren oberen Bereich des Fahrerhauses und damit im bequemen Griffbereich einer Person auf dem erhöhten Standplatz angeordnet wird. Ein solcher zusätzlicher oberer Betätigungsgriff soll in einer funktionsfähigen, kostengünstigen Konstruktion mit dem unteren Betätigungsgriff und/oder mit dem Öffnungsmechanismus des Türschlosses, vorzugsweise mechanisch und/oder elektrisch, für eine Türöffnung gekoppelt sein. Eine Person kann mit dem oberen Betätigungsgriff auch am erhöhten Standplatz bei Bedarf eine Fahrerhaustür bequem öffnen.

Eine mechanische Kopplung kann dabei zum Beispiel mit Gestängen und/oder Seilzügen und/oder hydraulisch und/oder pneumatisch erfolgen. Eine elektrische Kopplung kann zum Beispiel mittels ansteuerbarer Elektromagnete und/oder mittels elektromotorischer Aktuatoren erfolgen.

In einer gegebenenfalls zusätzlichen Ausführungsform kann als Betätigungsmittel eine handbetätigbare Fernbedienung vorgesehen sein, die am erhöhten Standplatz von einer Person bedienbar und die mittels Funksteuerung mit einem für eine Funkbetätigung ausgerüsteten Öffnungsmechanismus zum Öffnen der Fahrerhaustür gekoppelt ist. Mit der bisher üblichen Fernbedienungsfunktion kann bei einer Fahrzeugtür lediglich der Sperrmechanismus entriegelt werden - die Fahrzeugtür bleibt dabei aber nach wie vor geschlossen und muss anschließend mit dem Betätigungsgriff von Hand geöffnet werden. Erfindungsgemäß soll mit der hier beanspruchten Fernbedienung nicht (nur) der Sperrmechanismus entriegelt werden, sondern insgesamt das Türschloss dergestalt, dass die Fahrerhaustür zumindest um einen Öffnungsspalt aufspringt, so dass die Person auf dem erhöhten Standplatz die Fahrerhaustür ergreifen und insgesamt öffnen kann. Alternativ kann auch die Fahrertür mittels der Fernbedienung unter Verwendung eines Öffnungsaktuators selbsttätig geöffnet werden. Eine solche Fernbedienung kann entweder als tragbares und damit im Bereich des erhöhten Standplatzes anordenbares Gerät ausgebildet sein, das von einer Person auf den erhöhten Standplatz mitgenommen werden kann, oder dort ortsfest im Griffbereich am erhöhten Standplatz angeordnet sein. Die erfindungsgemäße Fernbedienungsfunktion kann dabei als Zusatzfunktion in an sich bekannte Fernbedienungen, wie beispielsweise in eine Fernbedienung zur Steuerung von Beladevorgängen, integriert werden.

In einer gegebenenfalls zusätzlichen Ausführungsform kann als Betätigungsmittel, das mit dem Betätigungsgriff (bevorzugt der untere Betätigungsgriff) und/oder mit dem Öffnungsmechanismus des Türschlosses gekoppelt ist, wenigstens ein Fußbetätigungselement im Fußbereich einer Person auf dem erhöhten Standplatz vorgesehen sein. Ein solches zusätzliches Fußbetätigungselement kann dazu zum Beispiel etwa in der Höhe des Betätigungsgriffs (im Falle von einem oberen und einem unteren Betätigungsgriff ist das bevorzugt der untere Betätigungsgriff) angeordnet werden. Als Fußbetätigungselement können bekannte Bauteile, wie ein Fußhebel und/oder ein Fußschalter vorgesehen sein, mit denen der Öffnungsmechanismus des Türschlosses, vorzugsweise mechanisch und/oder elektrisch, wie bereits oben beschrieben, gekoppelt werden kann.

Mit einem solchen Fußbetätigungselement kann eine Person auf dem erhöhten Standplatz bequem und ohne sicherheitskritische Verrenkungen oder turnerische Auf- und Absteigtätigkeiten die Fahrerhaustür öffnen.

In einer gegebenenfalls zusätzlichen Ausführung wird der Umstand benutzt, dass der Betätigungsgriff (bevorzugt der untere Betätigungsgriff) üblicherweise etwa im Fußbereich einer Person auf dem erhöhten Standplatz liegt. Dieser Betätigungsgriff kann dann zur Ausbildung des zusätzlichen Betätigungsmittels wenigstens eine zusätzliche Ausformung und/oder Anformung und/oder wenigstens ein zusätzliches Anbauelement aufweisen, wodurch der Betätigungsgriff so mit wenigstens einem Ergänzungselement, insbesondere einem Bügel und/oder einer Schlaufe, ergänzt ist, dass mittels dieses Ergänzungselementes zusätzlich zu einer Handbedienung auch eine Fußbetätigung, zum Beispiel mit einer Fußspitze, vom erhöhten Standplatz aus durchführbar ist.

Anhand einer Zeichnung wird die Erfindung weiter beispielhaft erläutert.

Es zeigen:
- Fig. 1: eine schematische Seitenansicht im Bereich eines Fahrerhauses eines Lastkraftwagens mit einer erfindungsgemäßen Ausführungsform einer zusätzlichen Türschlossbetätigung,
- Fig. 2: eine Ansicht entsprechend Fig. 1 mit einer Ausführungsform einer zusätzlichen Türschlossbetätigung, die zusätzlich zur erfindungsgemäßen Türschlossbetätigung vorgesehen sein kann,
- Fig. 3: eine Ansicht entsprechend Fig. 1 mit einer Ausführungsform einer zusätzlichen Türschlossbetätigung, die zusätzlich zur erfindungsgemäßen Türschlossbetätigung vorgesehen sein kann, und
- Fig. 4: eine Ansicht entsprechend Fig. 1 mit einer weiteren Ausführungsform einer zusätzlichen Türschlossbetätigung, die zusätzlich zur erfindungsgemäßen Türschlossbetätigung vorgesehen sein kann.

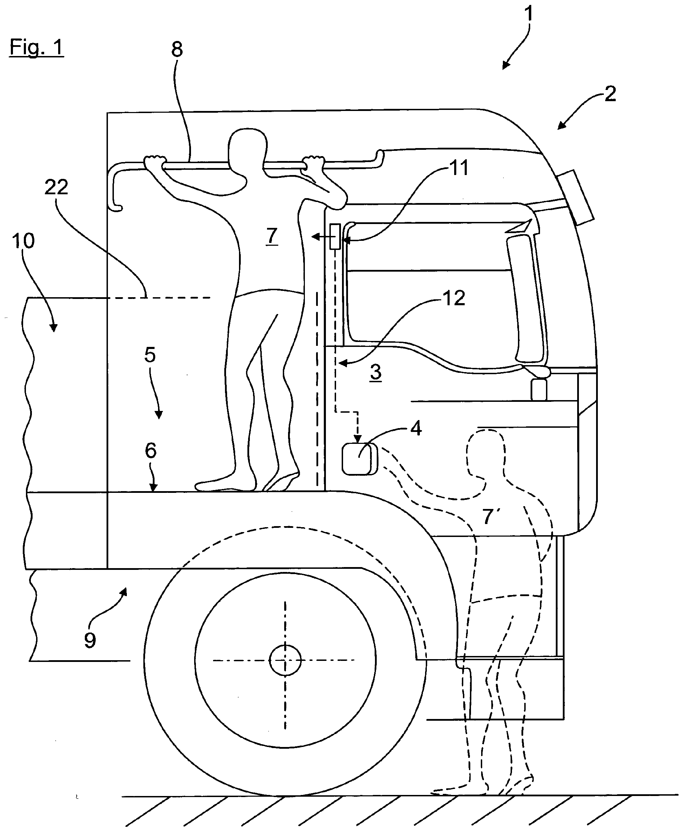

In Fig. 1 ist ein Nutzfahrzeug 1 als zum Beispiel Baufahrzeug-LKW in einer Seitenansicht im Bereich eines Fahrerhauses 2 dargestellt mit einer geschlossenen Fahrerhaustür 3 auf der Beifahrerseite. Zum Öffnen der Fahrerhaustür 3 ist ein (unterer) Betätigungsgriff 4 eines zugeordneten Türschlosses vorgesehen. Der untere Betätigungsgriff 4 ist hier lediglich beispielhaft als Griffmulde mit einer nach außen schwenkbaren Griffschale dargestellt.

Der untere Betätigungsgriff 4 liegt hier bequem im oberen Griffbereich einer neben dem Nutzfahrzeug 1 stehenden (strichliert eingezeichneten) Person 7'.

Das hier dargestellte Fahrerhaus 2 ist mit einem sogenannten Bauaufstieg als erhöhtem Standplatz 5 mit einer Trittfläche 6 für eine erhöht stehende Person 7 sowie bevorzugt auch mit einer Haltestange 8 im Dachbereich des Fahrerhauses 2 ausgerüstet. Die Trittfläche 6 des erhöhten Standplatzes 5 ist oberhalb eines vorderen Radhauses 9 seitlich hinter der Fahrerhaustür 3, etwa in Höhe des unteren Betätigungsgriffs 4 angeordnet. Von diesem erhöhten Standplatz 5 hat die Person 7 einen guten Überblick, insbesondere auf den Bereich einer Ladefläche 10, um beispielsweise einen Beladevorgang zu kontrollieren und zu steuern.

In der dargestellten Ausführungsform des Fahrerhauses 2 ist dieses nach hinten über die Fahrerhaustür 3 hinaus verlängert und der Standplatz 5 mit der Trittfläche 6 liegt in diesem Verlängerungsbereich. Alternativ könnte die Ladefläche 10 auch bei einem kürzeren Fahrerhause 2 bis unmittelbar hinter die Fahrerhaustür 3 herangeführt sein (strichlierte Linie 22), so dass dann alternativ die Person 7 auf der Ladefläche 10 als erhöhtem Standplatz stehen könnte.

Sowohl vom Bauaufstieg als erhöhtem Standplatz als auch gegebenenfalls von einem erhöhten Standplatz auf einer Ladefläche 10 soll die Person 7 bequem eine geschlossene Fahrerhaustür 3 öffnen können.

In der erfindungsgemäßen Ausführungsform nach Fig. 1 wird dies dadurch erreicht, dass zusätzlich zum unteren Betätigungsgriff 4 ein in Hochachsenrichtung gesehen oberer Betätigungsgriff 11 vorgesehen ist, hier bevorzugt im oberen seitlichen, hinteren Bereich der Fahrerhaustür bzw. des Türfensterrahmens und damit im bequemen Griffbereich der Person 7 angeordnet ist. Der obere Betätigungsgriff 11 ist mit dem unteren Betätigungsgriff 4 und/oder mit dem Öffnungsmechanismus des Türschlosses bevorzugt mechanisch und/oder elektrisch gekoppelt, wie dies schematisch durch die strichlierte Linie 12 angegeben ist.

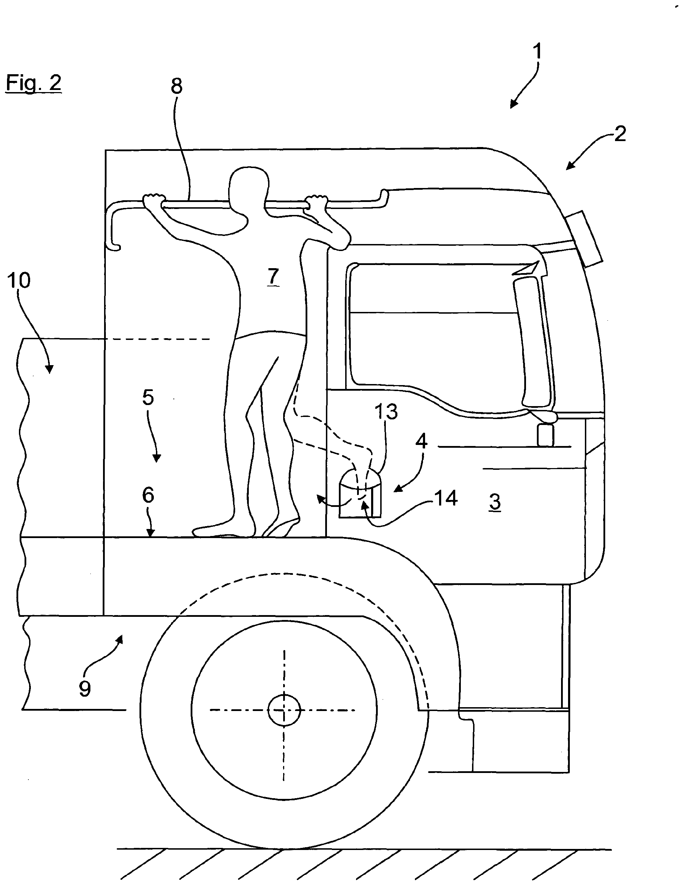

In Fig. 2 ist eine gegebenenfalls zusätzliche Möglichkeit für eine bequeme Türschlossbetätigung durch die Person 7 auf dem erhöhten Standplatz 5 dargestellt. Dazu weist der vorhandene Betätigungsgriff 4 eine ergänzende An- und/oder Ausformung und/oder wenigstens ein zusätzliches Anbauelement als Ergänzungselement auf, hier lediglich beispielhaft einen Bügel 13, so dass zusätzlich zu der üblichen Handbetätigung auch die hier (strichliert eingezeichnete) Fußbetätigung mit einer Fußspitze 14 von der Trittfläche 6 aus bequem möglich ist.

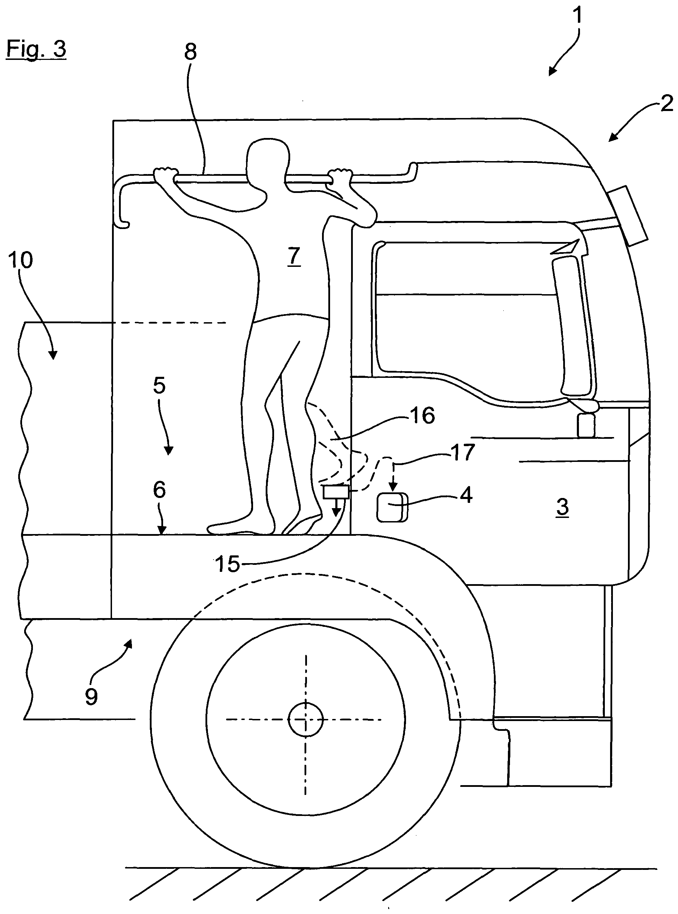

In Fig. 3 ist eine weitere gegebenenfalls zusätzliche Ausführungsform einer zusätzlichen Türschlossbetätigung als Fußbetätigung zusätzlich zum Betätigungsgriff 4 dargestellt. Dazu ist ein separates Fußbetätigungselement, hier beispielhaft als Fußhebel 15, im Fußbereich der auf dem erhöhten Standplatz 5 stehenden Person 7 vorgesehen, wobei der Fußhebel 15 hier beispielhaft mit dem rechten Fuß 16 (strichliert dargestellt) durch einfaches Zurücktreten betätigbar ist. Der Fußhebel ist wiederum bevorzugt mechanisch und/oder elektrisch mit dem Betätigungsgriff 4 und/oder mit dem Öffnungsmechanismus des Türschlosses gekoppelt, wie dies schematisch mit der strichlierten Linie 17 dargestellt ist.

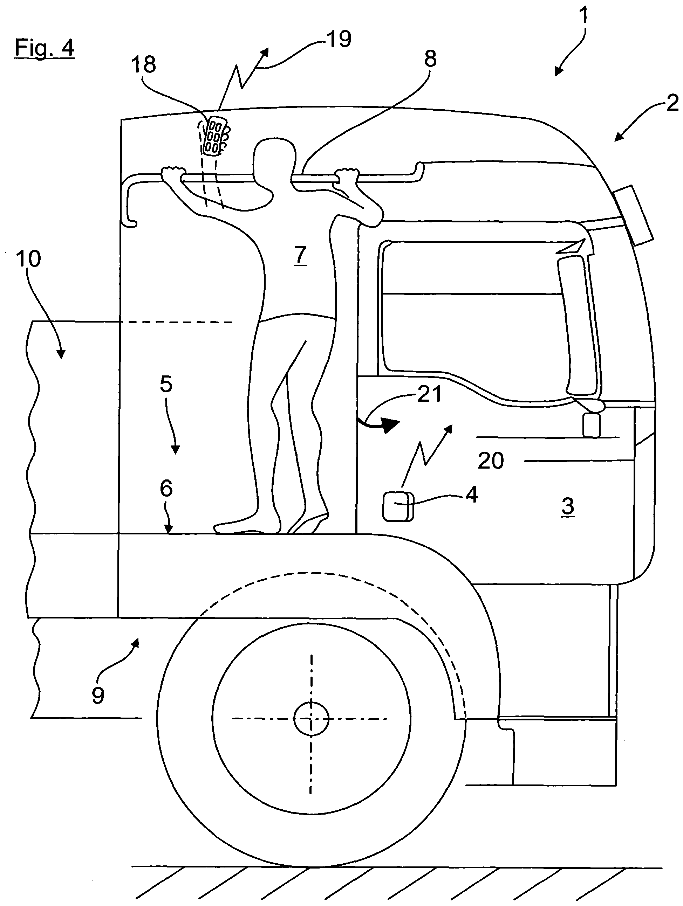

In Fig. 4 ist zudem eine weitere gegebenenfalls zusätzliche Türschlossbetätigung für die Person 7 auf dem erhöhten Standplatz 5 dargestellt. Hierzu ist eine handbetätigbare, tragbare Fernbedienung 18 vorgesehen, die von der Person 7 mit auf den erhöhten Standplatz 5 hinaufgenommen werden kann. Die Fernbedienung 18 ist mittels Funksteuerung (dargestellt durch die Pfeile 19, 20) mit einem für eine Funkbetätigung ausgerüsteten Öffnungsmechanismus zum Öffnen der Fahrerhaustür 3 gekoppelt. Beim Öffnen des Türschlosses mittels der Fernbedienung 18 springt die Fahrerhaustür 3 einen Öffnungsspalt (schematisch dargestellt mit Pfeil 19) auf, so dass die Person 7 die Fahrerhaustür 3 hintergreifen und ganz öffnen kann.

Bei jeder der in den Fig. 1 bis 4 dargestellten Ausführungsformen kann die auf dem hier beispielhaft Bauaufstieg als erhöhtem Standplatz 5 in erhöhter Position stehende Person 7 eine geschlossene Fahrerhaustür 3 bequem und einfach von diesem Standort aus öffnen.

### Bezugszeichenliste

- 1: Nutzfahrzeug
- 2: Fahrerhaus
- 3: Fahrerhaustür
- 4: unterer Betätigungsgriff
- 5: Standplatz/Bauaufstieg
- 6: Trittfläche
- 7: Person
- 7': Person
- 8: Haltestange
- 9: Radhaus
- 10: Ladefläche
- 11: oberer Betätigungsgriff
- 12: Linie
- 13: Bügel
- 14: Fußspitze
- 15: Fußhebel
- 16: rechter Fuß
- 17: Linie
- 18: Fernbedienung
- 19: Pfeil
- 20: Pfeil
- 21: Pfeil
- 22: Linie

## Patentansprüche

1. Nutzfahrzeug (1), insbesondere Baufahrzeug, mit einem Fahrerhaus (2) mit wenigstens einer Fahrerhaustür (3), und
mit einem erhöhten Standplatz (5) für eine Person (7) in etwa im Bereich und/oder in etwa in der Höhe eines Betätigungsgriffs (4) eines zugeordneten Türschlosses zum Öffnen der Fahrerhaustür (3),
wobei das Türschloss zum Öffnen der Fahrerhaustür (3) zudem mittels wenigstens eines zusätzlichen Betätigungsmittels (11; 13; 15; 18) betätigbar ist, das zusätzlich zum Betätigungsgriff (4) im Bereich des erhöhten Standplatzes (5) angeordnet ist, wobei das zusätzliche Betätigungsmittel (11; 13; 15; 18) beabstandet vom Betätigungsgriff (4) im Bereich des erhöhten Standplatzes (5) angeordnet ist,
**dadurch gekennzeichnet,**
**dass** als Betätigungsmittel zusätzlich zu dem, dem Türschloss zugeordneten unteren Betätigungsgriff (4) wenigstens ein weiterer, in Hochachsenrichtung gesehen oberer Betätigungsgriff (11) im oberen seitlich hinteren Bereich der Fahrerhaustür (3) und/oder im oberen seitlich hinteren Bereich des Fahrerhauses (2) angeordnet ist, der mit dem unteren Betätigungsgriff (4) und/oder mit einem Öffnungsmechanismus des Türschlosses zur Türöffnung gekoppelt ist (12).

2. Nutzfahrzeug nach Anspruch 1, **dadurch gekennzeichnet,**
**dass** der weitere obere Betätigungsgriff (11) mit dem unteren Betätigungsgriff (4) und/oder mit dem Öffnungsmechanismus des Türschlosses zur Türöffnung mechanisch gekoppelt ist (12), wobei diese mechanische Kopplung mittels Gestängen und/oder Seilzügen und/oder hydraulisch und/oder pneumatisch erfolgt, und/oder dass der weitere obere Betätigungsgriff (11) mit dem unteren Betätigungsgriff (4) und/oder mit dem Öffnungsmechanismus des Türschlosses zur Türöffnung elektrisch gekoppelt ist (12), wobei diese elektrische Kopplung, vorzugsweise mittels wenigstens eines ansteuerbaren Elektromagneten und/oder mittels wenigstens eines elektromotorischen Aktuators, erfolgt.

3. Nutzfahrzeug nach Anspruch 1 oder 2, **dadurch gekennzeichnet, dass** als zusätzliches Betätigungsmittel eine handbetätigbare Fernbedienung (18) vorgesehen ist, die am erhöhten Standplatz (5) von einer Person (7) bedienbar ist und die mittels Funkbetätigung mit einem dazu ausgerüsteten Öffnungsmechanismus zum Öffnen der Fahrerhaustür (3) gekoppelt ist.

4. Nutzfahrzeug nach Anspruch 3, **dadurch gekennzeichnet, dass** die Fernbedienung (18) durch ein tragbares und damit im Bereich des erhöhten Standplatzes (5) anordenbares Gerät gebildet ist, oder dass die Fernbedienung (18) ortsfest im Griffbereich der Person (7) am erhöhten Standplatz (5) angeordnet ist.

5. Nutzfahrzeug nach einem der vorhergehenden Ansprüche, **dadurch gekennzeichnet, dass** als zusätzliches Betätigungsmittel, das mit dem Betätigungsgriff (4) und/oder mit einem Öffnungsmechanismus des Türschlosses gekoppelt ist, wenigstens ein Fußbetätigungselement (15) im Fußbereich einer Person (7) auf dem erhöhten Standplatz (5) vorgesehen ist.

6. Nutzfahrzeug nach Anspruch 5, **dadurch gekennzeichnet, dass** als Fußbetätigungselement ein Fußhebel (15) und/oder ein Fußschalter vorgesehen ist, der mit dem Betätigungsgriff (4) und/oder mit dem Öffnungsmechanismus des Türschlosses, vorzugsweise mechanisch und/oder elektrisch, gekoppelt ist.

7. Nutzfahrzeug nach einem der vorhergehenden Ansprüche, **dadurch gekennzeichnet, dass** der Betätigungsgriff (4) zur Ausbildung eines zusätzlichen Betätigungsmittels wenigstens eine zusätzliche Ausformung und/oder Anformung und/oder wenigstens ein zusätzliches Anbauelement aufweist und dadurch der Betätigungsgriff (4) so mit wenigstens einem Ergänzungselement (13), insbesondere einem Bügel (13) und/oder einer Schlaufe, ergänzt ist, dass mittels dieses Ergänzungselementes zusätzlich zu einer Handbetätigung auch eine Fußbetätigung, insbesondere mit einer Fußspitze (14), vom erhöhten Standplatz (5) durchführbar ist.

## Claims

1. Commercial vehicle (1), in particular construction vehicle, with a drivers cab (2) with at least one drivers cab door (3), and
with a raised stand (5) for a person (7) approximately in the region and/or approximately at the height of an actuating handle (4) of an associated door lock for opening the drivers cab door (3),
wherein the door lock for opening the drivers cab door (3) can also be actuated by means of an additional actuating means (11; 13; 15; 18) which is arranged in addition to the actuating handle (4) in the region of the raised stand (5), wherein the additional actuating means (11; 13; 15; 18) is arranged spaced apart from the actuating handle (4) in the region of the raised stand (5),
**characterized**
**in that** the actuating means, additionally to the lower actuating handle (4) assigned to the door lock, includes at least one further, upper actuating handle (11), as seen in the direction of the vertical axis, in the upper, laterally rear region of the drivers cab door (3) and/or in the upper, laterally rear region of the drivers cab (2), said upper actuating handle being coupled (12) to the lower actuating handle (4) and/or to an opening mechanism of the door lock for opening the door.

2. Commercial vehicle according to Claim 1, **characterized**
**in that** the further upper actuating handle (11) is mechanically coupled (12) to the lower actuating handle (4) and/or to the opening mechanism of the door lock for opening the door, wherein said mechanical coupling is undertaken by means of linkages and/or cable pulls and/or hydraulically and/or pneumatically, and/or
**in that** the further upper actuating handle (11) is electrically coupled (12) to the lower actuating handle (4) and/or to the opening mechanism of the door lock for opening the door, wherein said electric coupling is undertaken preferably by means of at least one activatable solenoid and/or by means of at least one electromotive actuator.

3. Commercial vehicle according to Claim 1 or 2, **characterized in that** a remote control (18) which can be actuated manually is provided as the additional actuating means, said remote control being operable on the raised stand (5) by a person (7) and being coupled by means of radio actuation to an opening mechanism, which is equipped for this purpose, for opening the drivers cab door (3).

4. Commercial vehicle according to Claim 3, **characterized in that** the remote control (18) is formed by a device which is portable and which can therefore be arranged in the region of the raised stand (5), or **in that** the remote control (18) is arranged in a fixed position within reach of the person (7) on the raised stand (5).

5. Commercial vehicle according to one of the preceding claims, **characterized in that** at least one foot-actuating element (15) is provided in the foot region of a person (7) on the raised stand (5) as the additional actuating means which is coupled to the actuating handle (4) and/or to an opening mechanism of the door lock.

6. Commercial vehicle according to Claim 5, **characterized in that** the foot actuating element provided is a foot lever (15) and/or a foot switch which is coupled, preferably mechanically and/or electrically, to the actuating handle (4) and/or to the opening mechanism of the door lock.

7. Commercial vehicle according to one of the preceding claims, **characterized in that** the actuating handle (4) has at least one additional formation and/or moulding and/or at least one additional attachment element in order to form an additional actuating means and the actuating handle (4) is thereby complemented with at least one additional element (13), in particular a bracket (13) and/or a loop, in such a manner that said additional element in addition to manual actuation also enables foot actuation to be carried out, in particular with a tip of the foot (14), from the raised stand (5).

## Revendications

1. Véhicule utilitaire (1), en particulier engin de chantier, comprenant une cabine de conducteur (2) avec au moins une porte de cabine de conducteur (3), et
comprenant un poste de station debout rehaussé (5) pour une personne (7) approximativement dans la région et/ou approximativement à la hauteur d'une poignée d'actionnement (4) d'une serrure de porte associée pour ouvrir la porte de cabine de conducteur (3),
la serrure de porte pouvant en outre être actionnée pour ouvrir la porte de cabine de conducteur (3) au moyen d'au moins un moyen d'actionnement supplémentaire (11 ; 13 ; 15 ; 18) qui est disposé en plus de la poignée d'actionnement (4) dans la région du poste de station debout rehaussé (5), le moyen d'actionnement supplémentaire (11 ; 13 ; 15 ; 18) étant disposé à distance de la poignée d'actionnement (4) dans la région du poste de station debout rehaussé (5),
**caractérisé en ce**
**qu'**au moins une poignée d'actionnement supplémentaire (11), supérieure vu dans la direction de l'axe vertical, est disposée dans la région supérieure latéralement arrière de la porte de cabine de conducteur (3) et/ou dans la région supérieure latéralement arrière de la cabine de conducteur (2) en tant que moyen d'actionnement en plus de la poignée d'actionnement inférieure (4) associée à la serrure de porte, laquelle poignée d'actionnement supplémentaire supérieure est accouplée (12) à la poignée d'actionnement inférieure (4) et/ou à un mécanisme d'ouverture de la serrure de porte en vue de l'ouverture de la porte.

2. Véhicule utilitaire selon la revendication 1, **caractérisé en ce que**
la poignée d'actionnement supplémentaire (11) supérieure est accouplée mécaniquement (12) à la poignée d'actionnement inférieure (4) et/ou au mécanisme d'ouverture de la serrure de porte en vue de l'ouverture de la porte, cet accouplement mécanique s'effectuant au moyen de tringleries et/ou de câbles Bowden et/ou hydrauliquement et/ou pneumatiquement, et/ou
**en ce que** la poignée d'actionnement supplémentaire (11) supérieure est accouplée électriquement (12) à la poignée d'actionnement inférieure (4) et/ou au mécanisme d'ouverture de la serrure de porte en vue de l'ouverture de la porte, cet accouplement électrique s'effectuant de préférence au moyen d'au moins un électroaimant commandable et/ou au moyen d'au moins un actionneur à moteur électrique.

3. Véhicule utilitaire selon la revendication 1 ou 2, **caractérisé en ce que** l'on prévoit en tant que moyen d'actionnement supplémentaire une commande à distance (18) à commande manuelle, qui peut être commandée par une personne (7) sur le poste de station debout rehaussé (5) et qui est accouplée par une commande radio à un mécanisme d'ouverture équipé à cet effet en vue de l'ouverture de la porte de cabine de conducteur (3).

4. Véhicule utilitaire selon la revendication 3, **caractérisé en ce que** la commande à distance (18) est formée par un appareil portatif et pouvant ainsi être disposé dans la région du poste de station debout rehaussé (5), ou **en ce que** la commande à distance (18) est disposée fixement dans la région de préhension de la personne (7) au niveau du poste de station debout rehaussé (5).

5. Véhicule utilitaire selon l'une quelconque des revendications précédentes, **caractérisé en ce que** l'on prévoit en tant que moyen d'actionnement supplémentaire qui est accouplé à la poignée d'actionnement (4) et/ou à un mécanisme d'ouverture de la serrure de porte, au moins un élément d'actionnement à pied (15) dans la région des pieds d'une personne (7) se tenant sur le poste de station debout rehaussé (5).

6. Véhicule utilitaire selon la revendication 5, **caractérisé en ce que** l'on prévoit en tant qu'élément d'actionnement à pied un levier au pied (15) et/ou un commutateur au pied, qui est accouplé à la poignée d'actionnement (4) et/ou au mécanisme d'ouverture de la serrure de porte, de préférence de manière mécanique et/ou électrique.

7. Véhicule utilitaire selon l'une quelconque des revendications précédentes, **caractérisé en ce que** la poignée d'actionnement (4), pour réaliser un moyen d'actionnement supplémentaire, présente au moins une formation supplémentaire et/ou une formation rapportée supplémentaire et/ou au moins un élément rapporté supplémentaire et de ce fait la poignée d'actionnement (4) est complémentée avec au moins un élément complémentaire (13), en particulier un étrier (13) et/ou une boucle, de telle sorte qu'au moyen de cet élément complémentaire, en plus d'un actionnement à main, un actionnement au pied, en particulier avec une pointe du pied (14), puisse également être effectué depuis le poste de station debout rehaussé (5).
